# DEMANDE DE BREVET EUROPEEN

(11) **EP 4 810 317 A1**
(43) Date de publication de la demande: **23.09.2026**
(21) Numéro de dépôt: 26165283.8
(22) Date de dépôt: 17.03.2026
(51) Int. Cl.: B60P 1/54, B66C 23/06

(54) **DISPOSITIF DE CHARGEMENT ET DE DÉCHARGEMENT D'UN OBJET POUR VÉHICULE AUTOMOBILE**

(30) Priorité: 21.03.2025 FR 2502910
(71) Demandeur: Acekare, 33310 Lormont (FR)
(72) Inventeur: BENOIT, Eric, 33750 SAINT GERMAIN DU PUCH (FR); BETTINGER, Philippe, 33100 BORDEAUX (FR); LEBEAU, Pierre, 33910 SAINT MARTIN DE LAYE (FR)
(74) Mandataire: Plasseraud IP

(57) **Abrégé**

La présente invention concerne un dispositif de chargement et de déchargement d'un objet, pour véhicule ayant un espace de chargement s'étendant jusqu'à une ouverture arrière, ce dispositif de chargement et de déchargement comprenant une flèche (26) supportée par un mât (27) monté sur un châssis (28) de base, ce mât (27) définissant un axe principal. Selon l'invention,
- la flèche (26) formée d'un unique bras rigide, est montée pivotante autour de cet axe principal et est également mobile en rotation autour d'un axe de rotation, qui est perpendiculaire à cet axe principal de sorte que l'extrémité libre de la flèche (26) est apte à se déplacer en rotation entre une élévation supérieure et une élévation inférieure placées hors du véhicule, le châssis (28) de base étant positionné sur la surface inférieure de l'espace de chargement,
- ledit dispositif de chargement et de déchargement comprenant un unique câble (20) assurant à la fois l'étayage de la flèche (26) et le levage d'un objet, cet unique câble (20) passant par un chemin de câble comprenant une pluralité de poulies (36), cet unique câble comportant à son extrémité libre, une butée, pour venir en arrêt contre l'extrémité libre de la flèche (26) en vue d'assurer l'étayage de la flèche (26) lorsque l'unique câble (20) est sous tension, et
- ledit dispositif de chargement et déchargement comprend une unique unité de motorisation (37) montée sur ledit mât (27), ou sur un support de ladite flèche (26), pour entraîner ledit câble (20) en déplacement et l'étayage de la flèche (26).

## Description

### Domaine technique

La présente invention concerne en général les engins de manutention de charge.

Elle concerne plus particulièrement un dispositif de chargement et de déchargement d'un objet tel qu'un appareil de mobilité, pour véhicule automobile.

Elle concerne encore un véhicule automobile équipé d'un tel dispositif de chargement et de déchargement d'un objet.

### Technique antérieure

Le chargement d'objets dans le coffre d'un véhicule automobile peut présenter des difficultés, tant sur le plan physique que logistique.

En effet, le plancher du coffre se situe généralement à une hauteur importante par rapport au sol extérieur au véhicule.

Le soulèvement d'objets lourds ou encombrants depuis le sol pour les ranger dans le coffre, peut donc être compliqué, en particulier pour une personne de constitution fragile ou présentant une situation de handicap.

De plus, lorsque l'espace de rangement disponible dans le coffre est réduit, par exemple en raison d'un espace déjà partiellement rempli, il devient encore plus difficile d'y placer une charge.

Les manipulations d'objets peuvent donc présenter des risques pour la santé, tels que des blessures au dos ou des chutes. Elles peuvent également endommager l'objet transporté et/ou causer des dégradations au véhicule.

Pour faciliter ce type de chargement, il est courant d'utiliser une grue de coffre amovible, notamment lorsqu'il s'agit de soulever et de ranger des objets lourds et volumineux tels qu'un fauteuil roulant, un engin deux roues ou une valise pleine.

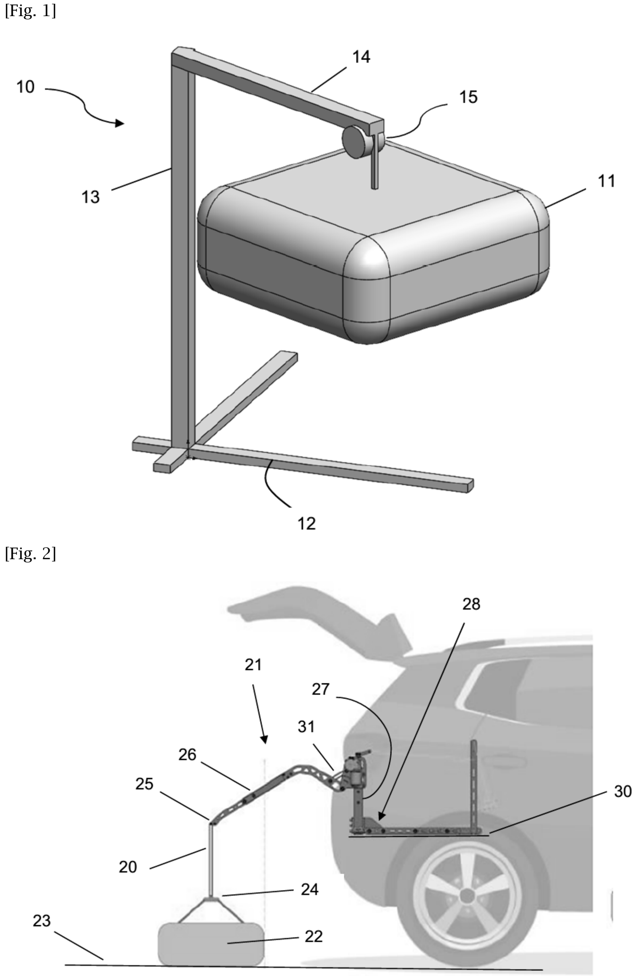

La figure 1 illustre une grue de coffre 10 de l'art antérieur permettant de soulever un fauteuil roulant 11 et de le ranger dans le coffre d'un véhicule (non représenté).

La grue de coffre 10 comporte typiquement un cadre de stabilisation 12 porté par le plancher de coffre (non représenté), à partir duquel s'élève une potence de levage 13.

Cette potence 13 de levage est mobile en rotation autour de sa base pour permettre le pivotement du bras 14 de la potence entre l'intérieur et l'extérieur du coffre. Cela permet de sortir l'extrémité du bras 14 du coffre, et de l'y réintroduire.

L'extrémité du bras 14 de la potence 13 porte un palan 15, lequel comporte un crochet destiné à être fixé au fauteuil roulant. Une motorisation fixée au palan 14 permet de déplacer le crochet et, ainsi, de soulever la charge.

La charge est typiquement levée jusqu'au seuil du coffre, puis la potence 13 est pivotée vers l'intérieur du véhicule, avant de faire descendre l'objet vers le plancher du coffre.

Un premier inconvénient de ce type de grue de coffre réside dans la grande hauteur d'oscillation de l'objet suspendu par rapport au palan 15, ce qui entraine un risque non négligeable de heurter la carrosserie du véhicule.

De plus, on observe que la majorité des grues de coffre actuellement sur le marché nécessitent d'être fixées au châssis du véhicule. Il est alors souvent nécessaire de percer le châssis ou de souder le cadre de stabilisation 12 sur le châssis.

Cette modification du châssis du véhicule est non seulement coûteuse mais elle est également préjudiciable à la valeur de revente du véhicule.

Un autre inconvénient réside dans la conception de la potence 13, qui doit être épaisse et rigide pour des raisons de tenue mécanique, ce qui la rend également très lourde.

En outre, le bras 14 de cette potence 13 est fixe, ce qui empêche d'exploiter pleinement les dimensions de l'ouverture arrière du véhicule pour faire passer l'objet. Cela entraine malheureusement une limitation du volume de la charge transportable par la grue, bien au-delà de ce qui serait nécessaire.

D'autres types de grues de coffre sont connues. Elles présentent également des inconvénients en ce qu'elles sont soit trop complexes, en présentant de nombreuses articulations, soit requièrent un démontage partiel après emploi pour permettre la fermeture du coffre.

Il existe donc un besoin pressant pour une grue de coffre, dont la conception originale permette de surmonter les inconvénients de l'art antérieur exposés ci-dessus.

### Objet de l'invention

La présente invention vise à pallier les inconvénients de l'art antérieur en proposant un dispositif de chargement et de déchargement d'un objet et un procédé de manutention d'un objet, simples dans leur conception et dans leur mode opératoire, de structure plus légère et pourtant capable de soulever des charges lourdes.

Un autre objet de la présente invention est un tel dispositif de chargement et de déchargement d'un objet, ne nécessitant aucune modification du châssis d'un véhicule pour son maintien et, étant amovible pour assurer une utilisation facile sur d'autres véhicules.

Encore un objet de la présente invention est un tel dispositif de chargement et de déchargement d'un objet autorisant le passage d'objets volumineux à travers l'ouverture arrière d'un véhicule, tout en exploitant pleinement les dimensions de cette ouverture.

Encore un objet de la présente invention est un tel dispositif de chargement et de déchargement d'un objet ne nécessitant aucun démontage pour fermer le coffre.

La présente invention vise également un procédé de manutention d'une charge particulièrement simple, rapide et fiable.

### Exposé de l'invention

A cet effet, l'invention concerne un dispositif de chargement et de déchargement d'un objet tel qu'un appareil de mobilité, pour véhicule automobile, tel qu'une voiture particulière, ayant un espace de chargement s'étendant jusqu'à une ouverture arrière, cet espace de chargement comprenant une surface inférieure, ledit dispositif de chargement et de déchargement comprenant une flèche supportée par un mât monté sur un châssis de base, ledit mât définissant un axe principal perpendiculaire ou sensiblement perpendiculaire à ladite surface inférieure de l'espace de chargement lorsque le châssis de base est soutenu par cette surface inférieure.

Selon l'invention,
- la flèche formée d'un unique bras rigide, est montée pivotante autour de l'axe principal,
- la flèche est également mobile en rotation autour d'un axe de rotation, qui est perpendiculaire ou sensiblement perpendiculaire audit axe principal, ou contenu dans un plan perpendiculaire ou sensiblement perpendiculaire audit axe principal, de sorte que l'extrémité libre de la flèche est apte à se déplacer en rotation entre une première élévation supérieure et une première élévation inférieure placées hors du véhicule, le châssis de base étant positionné sur la surface inférieure,
- ledit dispositif de chargement et de déchargement comprend un unique câble assurant à la fois l'étayage de la flèche et le déplacement, ou levage, d'un objet, cet unique câble passant par un chemin de câble comprenant une pluralité de poulies, une butée étant placée à l'extrémité libre de cet unique câble pour venir en arrêt contre l'extrémité libre de la flèche en vue d'assurer l'étayage de la flèche lorsque l'unique câble est sous tension, et
- ledit dispositif de chargement et déchargement comprend une unique unité de motorisation montée sur ledit mât, ou sur un support de ladite flèche, pour entraîner le câble en déplacement et assurer l'étayage de la flèche.

L'unique unité de motorisation, par exemple, un moteur, est, bien entendu, configurée pour, ou capable de délivrer une puissance suffisante pour, soulever, stabiliser et maintenir l'étayage de la flèche, en particulier lors de la manipulation d'objets lourds. De même, cette unité de motorisation est capable de gérer des charges dynamiques, c'est-à-dire des forces qui varient lorsque la flèche soulève ou déplace une charge.

La conception originale de ce dispositif de chargement et de déchargement d'un objet, apporte de nombreux avantages par rapport aux grues de coffre connues de l'art antérieur.

Notamment, en comportant un seul câble assurant à la fois les fonctions de levage de la charge et d'étayage de la flèche, la cinématique de ce dispositif de chargement et de déchargement permet d'utiliser une seule et même motorisation, ou un seul moteur.

Deux opérations de levage successives sont réalisées :
- lever la charge sans mouvement de la flèche dans un premier temps, puis
- lorsque l'objet ou le dispositif de manutention de cet objet, tel qu'un crochet, est en contact avec l'extrémité de la flèche, lever cette flèche tout en étayant cette dernière par une mise en tension du câble.

La cinématique permet de rentrer la charge à l'intérieur du coffre à la fin de la phase de levage.

Un tel dispositif de chargement et de déchargement d'un objet tel qu'un appareil de mobilité, est très léger tout en présentant une résistance mécanique élevée pour soulever et supporter une charge.

Des tests ont montré la possibilité de soulever une charge de l'ordre de cinquante (50) kilogrammes, placée sur la surface du sol, le plancher du coffre du véhicule s'élevant à une hauteur comprise entre soixante-dix (70) et cent (100) centimètres par rapport à la surface du sol.

De manière avantageuse, cette flèche est formée d'un unique bras rigide, de structure ajourée ou en treillis, ce qui rend le dispositif de chargement et de déchargement encore plus léger.

Ce dispositif de chargement et de déchargement est uniquement posé sur la plancher de l'espace de chargement du véhicule de sorte qu'il n'est pas requis de percer le châssis du véhicule. Ce dispositif de chargement et de déchargement peut donc être retiré d'un espace de chargement de manière très aisée.

Selon un mode de réalisation de ce dispositif de chargement et de déchargement d'une charge, l'unique bras rigide est configuré pour assurer dans une position haute de la flèche, un déplacement de l'extrémité de flèche dans un plan horizontal ou sensiblement horizontal lors du pivotement de la flèche autour du mât pour rentrer, ou sortir, ladite extrémité de flèche de l'espace de chargement.
De manière avantageuse, ce bras rigide permet ainsi, lorsque ledit bras est dans sa position haute, et que le bras est entrainé en rotation autour du mât de réaliser un déplacement de l'extrémité libre approximativement horizontal. L'axe du pivot étant vertical, le déplacement de l'extrémité de la flèche se fait dans un plan horizontal.

Selon un autre mode de réalisation de ce dispositif de chargement et de déchargement d'une charge ce bras rigide est conformé pour assurer son passage au travers de l'ouverture arrière tout en étant apte à atteindre la première élévation inférieure lorsque celle-ci est située au-dessous du bord d'extrémité inférieure de l'ouverture arrière par rapport à la surface du sol sur lequel le véhicule est placé, et encore mieux, au-dessous du châssis de ce véhicule.

Selon encore un autre mode de réalisation de ce dispositif de chargement et de déchargement d'une charge, ce bras comprend :
- une partie coudée configurée pour permettre audit bras d'atteindre ladite première élévation inférieure lorsque le bord d'extrémité inférieure de l'ouverture arrière est situé au-dessus de la surface inférieure de l'espace de chargement, ou lorsque la partie arrière du véhicule telle que le bouclier arrière, forme un obstacle pour atteindre ladite première élévation inférieure, et
- une partie droite, l'extrémité de flèche étant placée dans le prolongement de cette partie droite, ledit bras rigide étant configuré pour assurer dans une position haute de la flèche, un déplacement de l'extrémité de flèche dans un plan horizontal ou sensiblement horizontal lors du pivotement de la flèche autour du mât pour rentrer, ou sortir, ladite extrémité de flèche de l'espace de chargement.

La configuration de la flèche, et en particulier la partie courbée de son bras, permet avantageusement d'aller explorer des zones situées hors du véhicule et au-dessous du bord d'extrémité inférieure de l'ouverture arrière. Ces zones peuvent éventuellement se trouver sous le châssis du véhicule.

De préférence, la partie coudée de la flèche présente une forme incurvée, et encore mieux une forme arrondie.

Selon encore un autre mode de réalisation de ce dispositif de chargement et de déchargement d'une charge, il comprend un dispositif de butée agencé pour déterminer la première élévation inférieure de l'extrémité libre de la flèche, lorsque l'unique bras est en contact avec ce dispositif de butée, ledit dispositif de butée étant configuré pour supporter ledit bras unique lorsque ce dernier est en appui contre ce dispositif de butée, l'extrémité libre du câble étant alors libre de se déplacer en dehors de la flèche.
De préférence, ce dispositif de butée est solidaire du mât par une de ses extrémités et du bras unique par son autre extrémité.
La flèche venant en appui contre le dispositif de butée, l'étayage de la flèche n'est plus nécessaire et le câble est alors libre d'être utilisé pour le levage d'une charge.

Selon encore un autre mode de réalisation de ce dispositif de chargement et de déchargement d'une charge, cet espace de chargement comprenant quatre coins, la dimension longitudinale, ou longueur, du bras est définie de sorte que le châssis de base étant placé sur la surface horizontale inférieure de l'espace de chargement, en étant à la fois proche du bord d'extrémité inférieure de l'ouverture arrière et d'un coin, ladite flèche étant en position haute et l'extrémité distale de la flèche contenue dans ladite ouverture arrière, cette extrémité distale, ou tête de flèche, est placée à une deuxième élévation supérieure, qui se trouve à une distance d au-dessous du bord d'extrémité supérieure de l'ouverture arrière, cette distance d étant inférieure ou égale à 50 mm, et encore mieux inférieure ou égale à 20 mm.
Cette deuxième élévation est de préférence identique à la première élévation supérieure hors du véhicule.
De plus, la dimension longitudinale du bras peut être définie de sorte que l'extrémité libre de la flèche se déplaçant entre les premières élévations inférieure et supérieure, un espace d'au moins 20 cm, et encore mieux d'au moins 25 cm, et de manière encore plus préférentielle, d'au moins 30 cm, est laissé entre l'extrémité libre lors de son déplacement est le point le plus arrière.

Selon encore un autre mode de réalisation de ce dispositif de chargement et de déchargement d'une charge, la flèche est montée sur un support mobile sur le mât pour autoriser un ajustement du dispositif à différents véhicules.

Selon encore un autre mode de réalisation de ce dispositif de chargement et de déchargement d'une charge, l'unique câble passe par un chemin de câble comprenant une pluralité de poulies, certaines de ces poulies étant montées directement sur la flèche, d'autres étant situées en arrière de la flèche, par exemple sur le mât.

Selon encore un autre mode de réalisation de ce dispositif de chargement et de déchargement d'une charge, la butée est formée par un élément d'accroche, ou de suspension, ou un dispositif de manutention de l'objet.
De préférence, cet élément d'accroche comprend un crochet de levage.

Selon encore un autre mode de réalisation de ce dispositif de chargement et de déchargement d'une charge, la flèche présente une longueur réglable.
De préférence, la flèche comprend deux ou plusieurs éléments télescopiques, avantageusement tubulaires, les éléments télescopiques pouvant coulisser l'un par rapport à l'autre pour ajuster la longueur de la flèche.
Ce dispositif de chargement et de déchargement peut ainsi être uniquement posé sur la surface inférieure, ou plancher de l'espace de chargement.

Selon encore un autre mode de réalisation de ce dispositif de chargement et de déchargement d'une charge, le châssis de base comprend une surface d'appui, ou cadre, comprenant un ou plusieurs éléments d'appui destinés à venir en appui contre la surface inférieure de l'espace de chargement pour assurer le support du châssis de base sur cette surface inférieure.
De préférence, la surface d'appui peut comporter une pièce de renfort allongée s'élevant à partir d'un des éléments d'appui, cette pièce de renfort comportant un élément de retenue configuré pour être fixé de manière amovible à un élément de sécurité du véhicule, cet élément de retenue comprenant un élément de liaison souple, telle qu'une sangle, ou rigide dont une première extrémité est solidaire de la pièce de renfort allongée et l'autre extrémité comprenant un dispositif d'accrochage.
A titre d'exemple, cet élément de retenue est une sangle de reprise de couple qui vient se fixer entre le mât et un élément de sécurité du véhicule, empêchant ainsi le basculement du dispositif de chargement et de déchargement lors de la manutention de la charge.
De manière avantageuse, l'élément de sécurité du véhicule étant un boitier de verrouillage tel qu'une boucle de ceinture, et ledit élément d'accrochage comprenant un pêne destiné à s'engager dans le boîtier de verrouillage et à être maintenu en position de bouclage par le boîtier de verrouillage lorsque le pêne est engagé dans le boîtier de verrouillage, la sangle peut être fixée sur un point de la pièce de renfort, éventuellement ajustable, de sorte qu'elle puisse être mise en tension lorsque le pêne est engagé dans le boitier de verrouillage pour conférer la résistance attendue à l'arrachement.

Selon encore un autre mode de réalisation de ce dispositif de chargement et de déchargement d'une charge, le mât comporte un autre élément de retenue configuré pour être fixé de manière amovible à un élément de sécurité solidaire de la pièce de renfort, cet élément de sécurité étant un boitier de verrouillage tel qu'une boucle de ceinture.

Selon encore un autre mode de réalisation de ce dispositif de chargement et de déchargement d'une charge, la butée est formée par un élément d'accroche, ou de suspension, ou un dispositif de manutention de l'objet.

A titre purement illustratif, ce dispositif de manutention d'une charge, configuré pour s'attacher à l'extrémité libre du câble, peut être un palan pour soulever une charge.

Ce palan peut comprendre:
- une poutre destinée à s'étendre au-dessus de la charge à lever, cette poutre présentant une première et une seconde extrémités longitudinales,
- au moins un élément d'attache comportant une première et une deuxième portions de sangle configurées pour faire saillie à partir de la première et de la seconde extrémité de la poutre respectivement,
- chaque portion de sangle comportant des moyens pour ajuster la longueur de la portion de sangle correspondante de sorte à attacher la charge à manipuler au palan.

Alternativement, l'élément d'accroche peut être un crochet de levage.

La butée peut aussi être un T inversé.

La présente invention concerne également un véhicule automobile équipé d'un dispositif de chargement et de déchargement d'un objet tel que décrit précédemment.

La présente invention concerne encore un procédé de manutention d'un objet, tel qu'un fauteuil roulant pour personnes handicapées ou une charge telle qu'un bagage, à partir d'une première position dans laquelle ledit objet est placé à l'extérieur d'un espace de chargement, ou coffre, de véhicule automobile et à une élévation inférieure à celle de l'ouverture donnant accès à cet espace de chargement, par exemple situé sur une surface d'un sol à proximité du véhicule, pour permettre son positionnement et stockage dans l'espace de rangement de ce véhicule.
Selon l'invention, ce procédé de manutention comprend les étapes suivantes :
- on positionne sur l'objet, un dispositif de manutention permettant d'assurer la préhension dudit objet, ledit dispositif de manutention étant relié à l'extrémité d'un unique câble, ce câble passant par un chemin de câble d'un dispositif de chargement et de déchargement tel que décrit précédemment,
- on entraîne ledit câble pour lever l'objet de manière à amener le dispositif de manutention en contact avec un point de suspension de l'extrémité de la flèche du dispositif de chargement et de déchargement, le point de suspension étant configuré pour réduire au minimum la hauteur d'oscillation de cet objet par rapport à son point de suspension et permettre une mise en tension du câble pour étayer la flèche.

Selon un mode de réalisation de ce procédé de manutention d'un objet, ledit dispositif de manutention étant en butée contre l'extrémité de la flèche, on tire, ou on exerce une traction, sur le câble pour lever la flèche entre une position inférieure et une position supérieure, à l'extérieur du véhicule, à partir de laquelle on pivote la flèche pour rentrer son extrémité, et donc l'objet, dans le coffre.

Selon encore un autre mode de réalisation de ce procédé de manutention d'une charge, le dispositif de manutention comprenant au moins deux éléments de liaison souples non élastiques parallèles l'un à l'autre et placés aux extrémités d'une poutre, on entoure l'objet à lever au moyen desdits éléments de liaison souples pour emprisonner cet objet dans le dispositif de manutention.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**
   [Fig. 1] représente schématiquement une grue de coffre de l'art antérieur ;
**Fig. 2**
   [Fig. 2] est une représentation schématique d'un dispositif de chargement et de déchargement d'un objet selon un mode de réalisation particulier de l'invention, ce dispositif de chargement et de déchargement étant placé dans le coffre d'un véhicule automobile, l'extrémité de la flèche étant située dans une position inférieure hors de ce coffre en supportant une charge, la partie arrière de ce véhicule étant représenté en transparence pour laisser apparaître le dispositif de chargement et de déchargement ;
**Fig. 3**

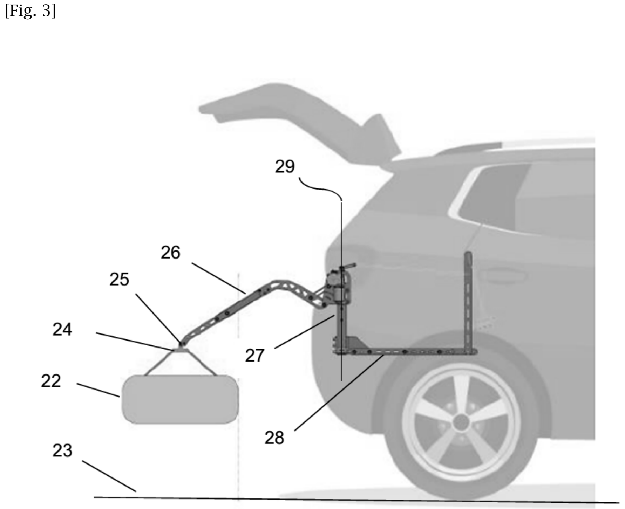

   [Fig. 3] est une représentation schématique du dispositif de chargement et de déchargement d'un objet de la Fig. 2, la flèche étant dans une élévation intermédiaire, l'objet étant en butée contre l'extrémité de la flèche ;
**Fig. 4**

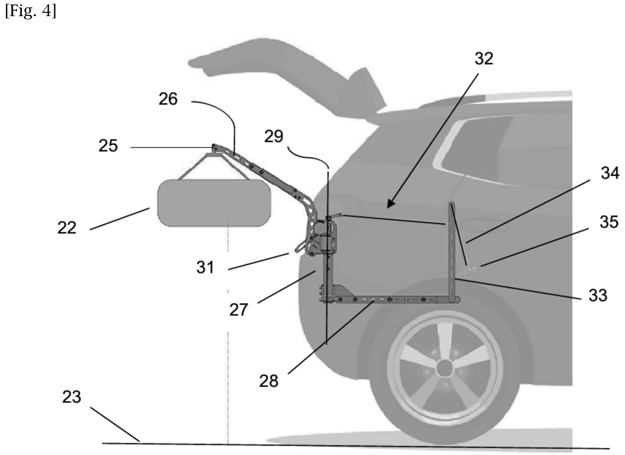

   [Fig. 4] est une représentation schématique du dispositif de chargement et de déchargement d'un objet de la Fig. 2, la flèche étant dans une élévation supérieure, l'objet étant en butée contre l'extrémité de la flèche ;
**Fig. 5**

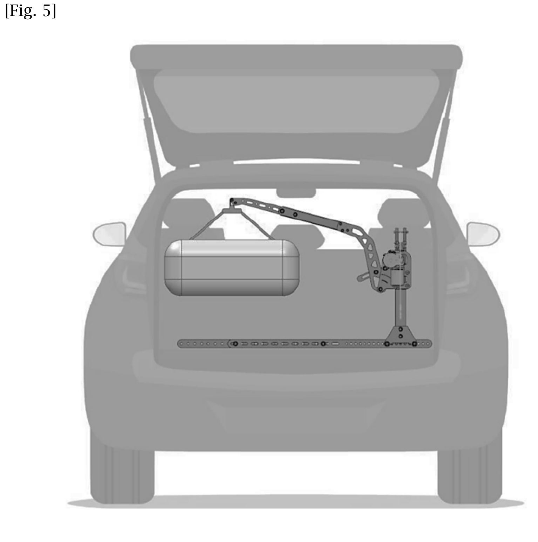

   [Fig. 5] est une représentation schématique du dispositif de chargement et de déchargement d'un objet de la Fig. 2, la flèche ayant été basculée à l'intérieur du coffre, l'objet ayant réalisé un déplacement approximativement horizontal lors du basculement de l'extrémité de la flèche entre l'extérieur et l'intérieur du coffre, la surface du sol sur lequel repose la voiture, étant plane ;
**Fig. 6**

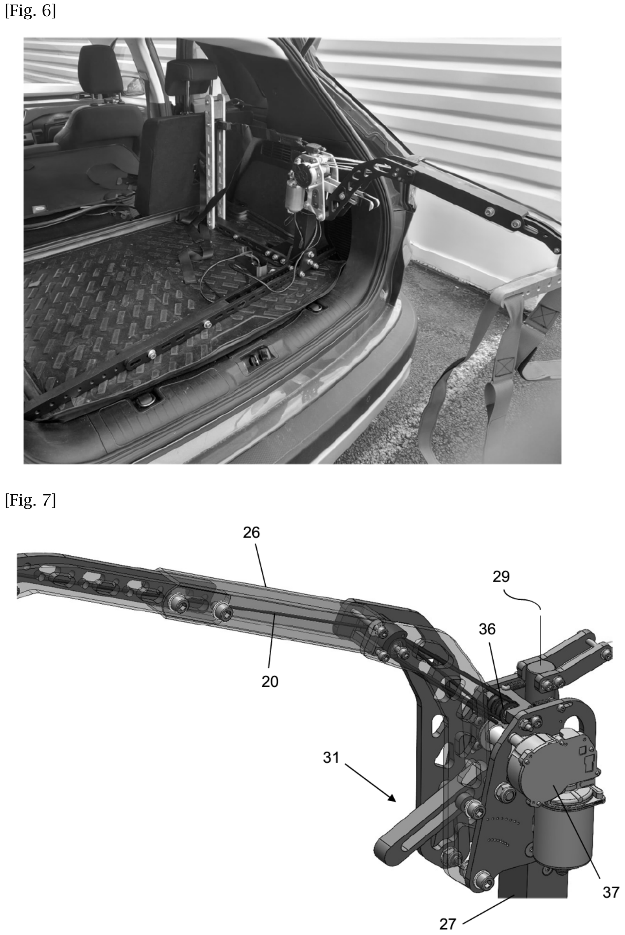

   [Fig. 6] est une illustration du dispositif de chargement et de déchargement d'un objet tel que représenté sur les Fig. 2 à 5, placé dans le coffre d'un véhicule automobile équipé d'un hayon ;
**Fig. 7**
   [Fig. 7] est une vue partielle et élargie du dispositif de chargement et de déchargement d'un objet de la Fig. 2, montrant par transparence le chemin du câble d'étayage et le système de poulies ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 2 à 6 illustrent de manière schématique et partielle, un dispositif de chargement et de déchargement d'une charge telle qu'une caisse, pour véhicule automobile, selon un mode de réalisation particulier de la présente invention.

Ce véhicule automobile comporte un espace de chargement s'étendant jusqu'à une ouverture arrière, cette ouverture arrière comportant un bord d'extrémité supérieure et un bord d'extrémité inférieure, cet espace de chargement comprenant une surface inférieure, encore appelée plancher de coffre.

Les Fig. 2 à 7 illustrent la cinématique d'enroulement d'un câble d'étayage 20 unique du dispositif de chargement et de déchargement 21, lequel permet de réaliser deux étapes de levage successives :
- d'abord, le levage de la charge 22 posée au sol 23 jusqu'à ce que cette dernière, ou le dispositif de manutention 24 tel qu'un crochet portant cette dernière et solidaire d'une extrémité du câble d'étayage 20, vienne en butée contre l'extrémité 25 de la flèche 26 de sorte à venir en prise avec, ou encore en arrêt contre, cette dernière, puis
- le levage de la flèche sous l'effet de la traction exercée par le câble d'étayage 20.

Ainsi, l'extrémité du câble d'étayage 20 joue un double rôle en assurant à la fois le levage de la charge 22 et l'étayage de la flèche 26.

Cet unique câble d'étayage 20 passe par un chemin de câble comprenant une pluralité de poulies 36, ce câble étant entraîné par une seule unité de motorisation 37. Le mécanisme d'entraînement de ce dispositif de chargement et déchargement est ainsi simplifié.

Comme cela est illustré sur les Fig. 4 et 5, une fois l'extrémité 25 de la flèche placée dans la position supérieure, c'est-à-dire à la fin de la phase de levage, il suffit de pivoter la flèche vers l'intérieur pour rentrer celle-ci dans le coffre.

La charge 22 ainsi soulevée, réalise alors un mouvement approximativement horizontal lors du basculement de l'extrémité de la flèche 26 entre l'extérieur et l'intérieur du coffre, la surface du sol 23 sur lequel repose la voiture, étant plane.

On évite ainsi tout risque que la charge 22 ne vienne heurter la carrosserie du véhicule.

La flèche 26 est supportée par un mât 27 monté sur un châssis 28 de base, ce mât 27 définissant un axe principal 29 perpendiculaire ou sensiblement perpendiculaire à la surface inférieure 30 de l'espace de chargement, lorsque le châssis 28 de base est soutenu par cette surface inférieure.

Cette flèche 26 est à la fois mobile en rotation autour de cet axe principal 29 et autour d'un autre axe de rotation, qui est perpendiculaire ou sensiblement perpendiculaire à cet axe principal de sorte que l'extrémité libre 25 de la flèche est apte à se déplacer en rotation entre une première élévation supérieure et une première élévation inférieure placées hors du véhicule, le châssis 28 de base étant positionné sur la surface inférieure 30 de l'espace de chargement.

La flèche 26 est avantageusement formée d'un unique bras rigide et de structure en treillis de sorte que cette flèche consiste en une structure ajourée et légère.

Ce bras comprend une partie coudée configurée pour permettre à ce bras d'atteindre la première élévation inférieure lorsque le bord d'extrémité inférieure de l'ouverture arrière est situé au-dessus de la surface inférieure de l'espace de chargement, sans entrer en contact avec ce bord d'extrémité inférieure, et une partie droite, l'extrémité de flèche étant placée dans le prolongement de cette partie droite.

Ce dispositif de chargement et de déchargement comporte un chemin de câble comprenant plusieurs poulies 36, et dans lequel passe cet unique câble d'étayage 20 servant à la fois au déplacement ou levage de la charge et à l'étaiement de la flèche pour supporter la charge.

Ce dispositif de chargement et de déchargement comprend également un mécanisme de butée 31 agencé pour déterminer la première élévation inférieure de l'extrémité libre de la flèche, lorsque l'unique bras est en contact avec ce mécanisme de butée 31.

Ce mécanisme de butée 31 est configuré pour supporter la flèche lorsque cette dernière est en appui contre celui-ci, l'extrémité libre du câble étant alors libre de se déplacer en dehors de la flèche.

A titre purement illustratif, ce mécanisme de butée 31 prend ici la forme de deux rails parallèles et montés en pivotement sur le mât 26, la flèche portant un axe engagé dans ces rails et coulissant dans ceux-ci de sorte que cet axe venant en butée contre les extrémités de ces rails, la flèche est stoppée dans son mouvement.

Un détecteur de position tel qu'un interrupteur électromécanique, permet de stopper le moteur lorsque la charge 22 est détectée comme étant en contact avec le sol 23. En effet, dès que la charge 22 touche le sol, l'unique câble d'étayage 20 se détend et l'interrupteur électromécanique détecte cet état du câble.

Ce dispositif de chargement et de déchargement intègre également une nouvelle méthode de fixation à l'aide :
- d'une première sangle 32 tendue reliée à une de ses extrémités au mât 26 et à son autre extrémité à un second mât 33 en treillis métallique, lequel s'élève verticalement ou sensiblement verticalement à partir du châssis 28 de base, et
- d'une seconde sangle 34 tendue reliée d'une part à ce second mât 33 et d'autre part à un dispositif de sécurité 35 du véhicule, ici une boucle de ceinture, ce qui empêche le basculement pendant le fonctionnement.

Cette configuration garantit que le dispositif de chargement et déchargement est solidement soutenu sur la surface inférieure de l'espace de chargement sans nécessiter de modifications permanentes du véhicule, telles que le perçage ou le soudage. Cette configuration d'arrimage de type sangle de ceinture/boucle de ceinture permet d'installer et de retirer facilement le dispositif de chargement, ce qui permet de l'adapter à différents véhicules sans en compromettre l'intégrité structurelle.

L'ensemble de ces caractéristiques constitue une solution plus conviviale, plus rentable et plus adaptable pour le chargement et le déchargement d'objets dans le coffre d'un véhicule.

## Revendications

1. Dispositif de chargement et de déchargement d'un objet, pour véhicule automobile, ayant un espace de chargement s'étendant jusqu'à une ouverture arrière, cet espace de chargement comprenant une surface inférieure, ledit dispositif de chargement et de déchargement comprenant une flèche (26) supportée par un mât (27) monté sur un châssis (28) de base, ledit mât (27) définissant un axe principal perpendiculaire ou sensiblement perpendiculaire à ladite surface inférieure de l'espace de chargement lorsque le châssis (28) de base est soutenu par cette surface inférieure, **caractérisé en ce que**
- ladite flèche (26) formée d'un unique bras rigide, est montée pivotante autour de l'axe principal,
- ladite flèche (26) est également mobile en rotation autour d'un axe de rotation, qui est perpendiculaire ou sensiblement perpendiculaire audit axe principal, ou contenu dans un plan perpendiculaire ou sensiblement perpendiculaire audit axe principal, de sorte que l'extrémité libre de la flèche (26) est apte à se déplacer en rotation entre une première élévation supérieure et une première élévation inférieure placées hors du véhicule, le châssis (28) de base étant positionné sur la surface inférieure,
- ledit dispositif de chargement et de déchargement comprend un unique câble (20) assurant à la fois l'étayage de la flèche (26) et le déplacement d'un objet, cet unique câble (20) passant par un chemin de câble comprenant une pluralité de poulies (36), une butée étant placée à l'extrémité libre de cet unique câble pour venir en arrêt contre l'extrémité libre de la flèche (26) en vue d'assurer l'étayage de la flèche (26) lorsque l'unique câble (20) est sous tension, et **en ce que**
- ledit dispositif de chargement et déchargement comprend une unique unité de motorisation (37) montée sur ledit mât (27), ou sur un support de ladite flèche (26), pour entraîner le câble (20) en déplacement et assurer l'étayage de la flèche, et **en ce que** le châssis (28) de base comprend une surface d'appui, ou cadre, comprenant un ou plusieurs éléments d'appui destinés à venir en appui contre la surface inférieure de l'espace de chargement pour assurer le support du châssis (28) de base sur cette surface inférieure, cette surface d'appui comportant une pièce de renfort allongée s'élevant à partir d'un des éléments d'appui, cette pièce de renfort comportant un élément de retenue configuré pour être fixé de manière amovible à un élément de sécurité du véhicule, cet élément de retenue comprenant un élément de liaison souple (31) ou rigide dont une première extrémité est solidaire de la pièce de renfort allongée et l'autre extrémité comprenant un dispositif d'accrochage.

2. Dispositif de chargement et de déchargement d'un objet selon la revendication 1, **caractérisé en ce que** l'unique bras rigide est configuré pour assurer dans une position haute de la flèche (26), un déplacement de l'extrémité de flèche (26) dans un plan horizontal ou sensiblement horizontal lors du pivotement de la flèche (26) autour du mât (27) pour rentrer, ou sortir, ladite extrémité de flèche (26) de l'espace de chargement.

3. Dispositif de chargement et de déchargement d'un objet selon la revendication 1 ou 2, **caractérisé en ce que** cette ouverture arrière comportant un bord d'extrémité supérieure et un bord d'extrémité inférieure, ledit bras rigide est conformé pour assurer son passage au travers de l'ouverture arrière tout en étant apte à atteindre la première élévation inférieure lorsque celle-ci est située au-dessous du bord d'extrémité inférieure de l'ouverture arrière par rapport à la surface du sol sur lequel le véhicule est placé, et encore mieux, au-dessous du châssis de ce véhicule.

4. Dispositif de chargement et de déchargement d'un objet selon l'une quelconque des revendications précédentes, **caractérisé en ce que** cette ouverture arrière comportant un bord d'extrémité supérieure et un bord d'extrémité inférieure, ce bras comprend :
- une partie coudée configurée pour permettre audit bras d'atteindre la première élévation inférieure lorsque le bord d'extrémité inférieure de l'ouverture arrière est situé au-dessus de la surface inférieure de l'espace de chargement, ou lorsque le châssis arrière du véhicule forme un obstacle, et
- une partie droite, l'extrémité de flèche (26) étant placée dans le prolongement de cette partie droite.

5. Dispositif de chargement et de déchargement d'un objet selon la revendication précédente, **caractérisé en ce que** ladite partie coudée de la flèche (26) présente une forme incurvée, et encore mieux une forme arrondie.

6. Dispositif de chargement et de déchargement d'un objet selon l'une quelconque des revendications précédentes, **caractérisé en ce qu'**il comprend un dispositif de butée agencé pour déterminer la première élévation inférieure de l'extrémité libre de la flèche (26), lorsque l'unique bras est en contact avec ce dispositif de butée, ledit dispositif de butée étant configuré pour supporter ledit bras unique lorsque ce dernier est en appui contre ce dispositif de butée, l'extrémité libre du câble étant alors libre de se déplacer en dehors de la flèche.

7. Dispositif de chargement et de déchargement d'un objet selon l'une quelconque des revendications précédentes, **caractérisé en ce que** la flèche (26) est montée sur un support qui est mobile sur le mât (27) pour autoriser un ajustement du dispositif à différents véhicules.

8. Dispositif de chargement et de déchargement d'un objet selon l'une quelconque des revendications précédentes, **caractérisé en ce que** la flèche (26) présente une longueur réglable.

9. Dispositif de chargement et de déchargement d'un objet selon l'une quelconque des revendications précédentes, **caractérisé en ce que** ladite butée est formée par un élément d'accroche, ou de suspension, ou un dispositif de manutention de l'objet.
